# EUROPÄISCHE PATENTANMELDUNG

(11) **EP 1 166 894 A2**
(43) Veröffentlichungstag der Anmeldung: **02.01.2002**
(21) Anmeldenummer: 01113893.0
(22) Anmeldetag: 08.06.2001
(51) Int. Cl.: B05D 3/06

(54) **UV Strahlungsquelle**

(30) Priorität: 23.06.2000 DE 20010714 U; 26.07.2000 DE 20012893 U
(71) Anmelder: UV Reline.Tec GmbH & Co., 87437 Kempten (DE)
(72) Erfinder: Reutemann, Thomas, 87527 Sonthofen (DE)
(74) Vertreter: Fischer, Wolf-Dieter, Dipl.-Ing.

(57) **Zusammenfassung**

Die Strahlungsquelle dient der Bestrahlung von Innenwänden 1 langgestreckter Hohlräume 2 mit kreisförmigem bis eiförmigem Querschnitt unter kontinuierlicher Bewegung der Strahlung längs der Achse 3 des Hohlraumes 2, insbesondere für die Aushärtung strahlungshärtbarer Kunstharz-Laminate 4 mittels UV-Strahlung, mit einem Fahrgestell, an dem Strahler 6, 7, 7a angeordnet sind. Die Strahlungsquelle besteht aus mehreren miteinander koppelbaren Modulen 8, 9, 10, 11, die jeweils zwei mittels Verbindungsrohren 12, 13 starr verbundene Einheiten 14, 15 aufweisen und zwischen zwei Einheiten 14, 15 in axialer Richtung und im Abstand zum Laminat 4 ein oder mehrere Strahler 6, 7, 7a vorgesehen sind, wobei die Strahler 6, 7, 7a an aufeinander folgenden Modulen 8, 10 bzw. 9, 11 wechselseitig im oberen oder unteren Bereich oder oben und unten mit verschiedener Leistung, bzw. axial zentrisch, des Hohlraumes 2 angeordnet sind. Jede Einheit 14, 15 weist im unteren Sohlenbereich 16 bzw. im oberen Bereich des Hohlraumes 2 gefederte Räder 17, 18 auf.

## Beschreibung

Die Erfindung betrifft eine Strahlungsquelle für die Bestrahlung von Innenwänden langgestreckter Hohlräume mit kreisförmigem bis eiförmigem Querschnitt unter kontinuierlicher Bewegung der Strahlung längs der Achse des Hohlraumes, insbesondere für die Aushärtung strahlungshärtbarer Kunstharz-Laminate mittels UV-Strahlung, mit einem Fahrgestell, an dem Strahler angeordnet sind.

Es ist eine Strahlungsquelle für die Bestrahlung von Innenwänden langgestreckter Hohlräume bekannt, die ein Fahrgestell mit einem in Achsrichtung verlaufenden Zentralträger aufweist, auf dessen Umfang mehrere Lampen mit nach außen gerichteten Reflektoren vorgesehen sind. Solche Strahlungsquellen dienen insbesondere zum Aushärten von Kunstharz-Laminaten bei der Innensanierung von Rohren und Kanalisationsleitungen mittels UV-Strahlung. Bekannt sind weiterhin Strahlungsquellen für Hohlräume mit eiförmigem Querschnitt, wobei das Fahrgestell entsprechend dem Hohlraumquerschnitt verlaufende Seitenplatten aufweist, die mittels eines dem Querschnitt angepassten Kern verbunden sind. Am Umfang des Kerns sind die Lampen angeordnet, wobei an den Seitenplatten im Bereich des unteren Sohlenbereichs und seitlich im oberen Rohrbereich gefederte Räder angebracht sind.

Der wesentliche Nachteil dieser bekannten Strahlungsquelle besteht darin, daß die Wandstärke zum Durchhärten der Laminate begrenzt ist und insbesondere auch keine ausreichende Aushärtegeschwindigkeit erreicht werden kann. Ein weiterer wesentlicher Nachteil besteht in dem aufwendigen konstruktiven Aufbau der Strahlungsquelle, wobei die seitlichen Räder beim Einsetzen in den Hohlraum bereits ihre ursprüngliche Position einnehmen, so dass ein tiefes Einsetzen in das zu kalibrierende Laminat nicht möglich ist. Ein gleichmäßiges Bestrahlen des Laminats, insbesondere bei eiförmigen Querschnitten ist nicht möglich.

Der Erfindung liegt die Aufgabe zugrunde, eine derartige Stahlungsquelle so auszubilden, dass ein Durchhärten von Laminaten dickerer Wandstärke bei höheren Aushärtegeschwindigkeiten erreicht wird.

Diese Aufgabe wird nach der Erfindung dadurch gelöst, dass die Strahlungsquelle aus mehreren miteinander koppelbaren Modulen besteht, die jeweils zwei mittels Verbindungsrohren starr verbundene Einheiten aufweisen und zwischen zwei Einheiten in axialer Richtung und im Abstand zum Laminat ein oder mehrere Strahler vorgesehen sind, wobei die Strahler an aufeinanderfolgenden Modulen wechselseitig im oberen oder unteren Bereich, bzw. axial zentrisch, des Hohlraumes angeordnet sind und daß jede Einheit im unteren Sohlenbereich bzw. im oberen Bereich des Hohlraumes gefederte Räder aufweist.

Bei sehr dicken Laminaten, bei welchen zur absoluten Durchhärtung zusätzlich mit Peroxiden gearbeitet wird (Kombinationshärtung) wird durch die beschriebene Strahleranordnung eine optimale Intensitätsverteilung erreicht.

Eine weitere Ausführungsform sieht vor, dass jede Einheit zwei kreuzförmig angeordnete Rohrrahmen aufweist, an denen die Räder mittels Radhalterungen geführt sind, die in einer eingezogenen Position mit Hilfe von Sperrbolzen feststellbar sind.

Es wird weiterhin vorgeschlagen, dass der an der in Zugrichtung vorderen Einheit angeordnete Sperrbolzen mit einem Bowdenzug versehen ist.

Es ist vorteilhaft, dass gegenüber dem im unteren Sohlenbereich angeordneten Rad eine Schutzrolle angeordnet ist.

Weiterhin wird vorgeschlagen, dass die Module einander zugewandt Zugstangen aufweisen, die an Kugelgelenken miteinander gekoppelt sind.

Schließlich ist es vorteilhaft, dass an den einander zugewandten Seiten der Rohrrahmen der Einheiten eines Moduls Rahmenhalterungen angebracht sind, an denen die Verbindungsrohe befestigt sind.

Die Erfindung bringt insbesondere den Vorteil, daß das Durchhärten von Laminaten dickerer Wandstärke, z. B. bis 15 mm, bei realistischen Aushärtegeschwindigkeiten von bis zu 50 cm/min möglich ist. Jedes Rad bzw. Radebene kann in einer verminderten Ausfahrposition gesperrt werden, so dass die Stahlungsquelle durch die montierten Packer in dem Laminat montiert werden kann. Durch die Möglichkeit jede Radebene pro Modul voneinander getrennt zu sperren, kann die Strahlungsquelle möglichst tief in das zu kalibrierende Laminat eingebracht und erst nachdem das Modul in dem Laminat sitzt, können die Räder entsperrt werden, wobei die gefederten Räder an dem Laminat anliegen. Durch diese Konstruktion lassen sich jeweils bis zu 1000 Watt-Strahler, vorzugsweise 1 x1000 Watt und 1 x 600 oder 400 Watt pro Modul verwenden, so dass eine sehr lange bestrahlte Fläche erzielt wird. Eine Schattenbildung wird durch die fortlaufende axiale Bewegung vermieden. Die einzelnen Module sind einerseits fest miteinander gekoppelt, lassen sich andererseits aber auch einfach voneinander lösen. Der Vorteil der zusätzlich in der Sohle angebrachten Strahler ist eine verbesserte Durchhärtung des Laminates, da der Abstand des im oberen Bereich montierten Strahlers zur Sohle hin größer ist.

Die Erfindung wird in der nachfolgenden Beschreibung anhand von in den Zeichnungen dargestellten Ausführungsbeispielen näher erläutert.

### Es zeigen,

- Fig. 1: eine Ausführungsform der erfindungsgemäßen Strahlungsquelle im Aufriß,
- Fig. 2: einen Schnitt nach der Linie A-A in Fig. 1 bei eingezogenen und mittels Sperrbolzen gesicherten Rädern,
- Fig. 3: eine Ansicht gemäß Fig. 2 bei ausgefahrenen Rädern und entfernten Sperrbolzen,
- Fig. 4: eine weitere Ausführungsform der Strahlungsquelle bei einem kreisförmigen Querschnitt und
- Fig. 5: einen Schnitt nach der Linie B-B in Fig. 4.

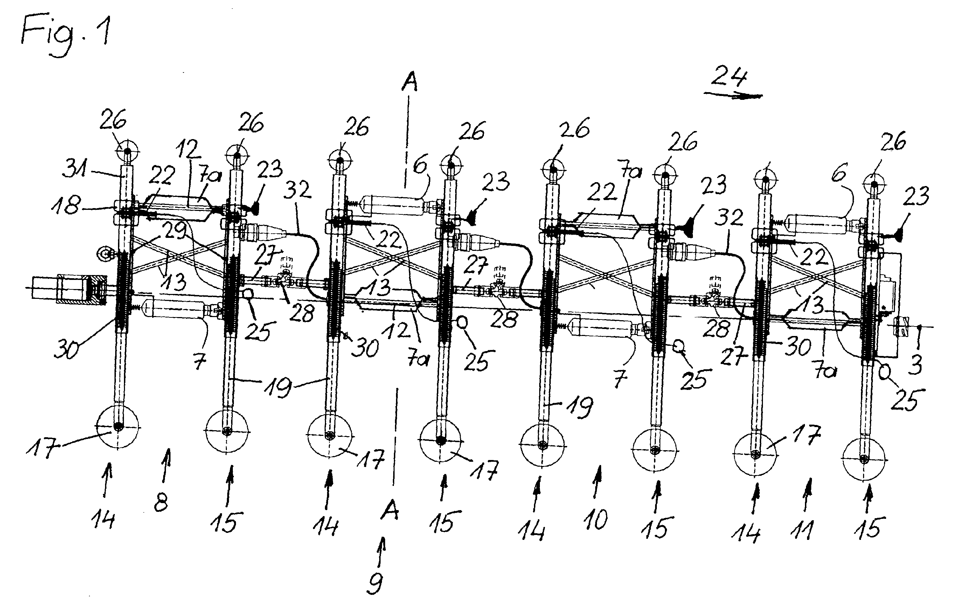

Bei der in den Figuren 1 bis 3 dargestellten Ausführungsform handelt es sich um eine Strahlungsquelle für Ei-Profile mit Rohrmaßen von bis zu etwa Durchmessern von 600 mm und Höhen von 900 mm. An der Innenwand 1 eines zu sanierenden Rohres 5 liegt ein Kunstharzlaminat 4 an, das den eiförmigen Hohlraum auskleidet. Die Strahlungsquelle setzt sich aus einzelnen Modulen 8, 9, 10, 11 zusammen, die wiederum aus zwei Einheiten 14, 15 bestehen, die mechanisch mit Hilfe von Verbindungsrohren 12 bzw. 13 mechanisch starr verbunden sind. Diese Verbindungsrohre 12, 13 sind im Abstrahlungsbereich gewinkelt, so dass durch die fortlaufende axiale Bewegung eine Schattenbildung vermieden wird.

Die in Zugrichtung 24 gesehen vordere Einheit 15 eines Moduls weist kreuzförmig angeordnete Rohrrahmen 19 bzw. 20 auf, wobei die Rohrrahmen 20 waagerecht im Bereich des Durchmessers des Hohlraumes 2 und der Rohrrahmen 19 im Bereich der Höhe angeordnet sind. In den Rohrrahmen 19 bzw. 20 sind Radhalterungen 21 geführt und an Druckfedern oder Gasdruckdämpfern 30 abgestützt, wobei sich an den Enden Räder 18 und im unteren Sohlenbereich 16 ein Rad 17 befinden. Gegenüberliegend zu dem Rad 17 befindet sich an einer Halterung 31 eine Schutzrolle 26 in festem Abstand zum Laminat 4, die verhindert, dass das durch sein Eigengewicht während der Lichtquellenmontage aufliegende Laminat 4 durch die Lichtquelle verletzt wird.

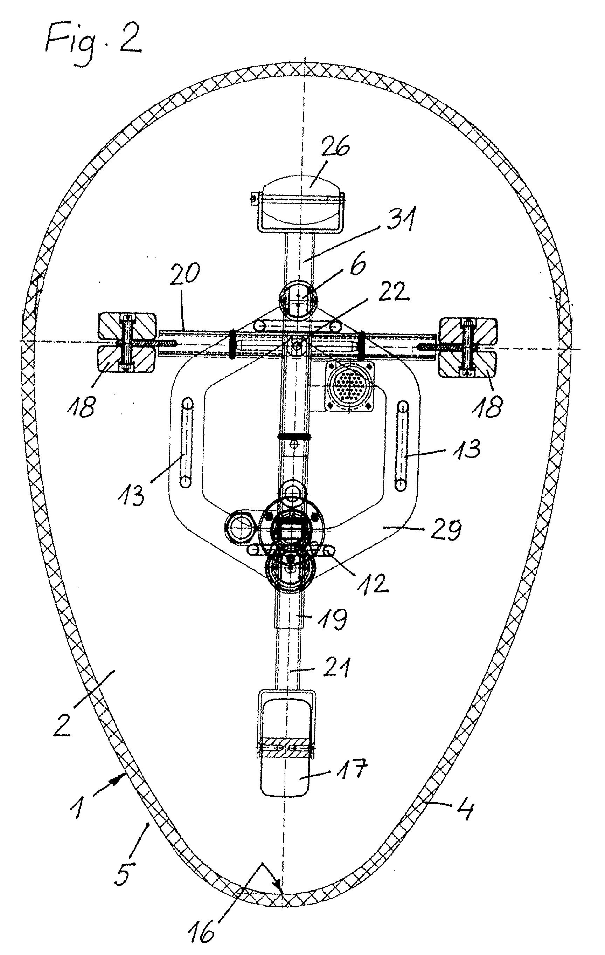

Die weitere Einheit 14 eines Moduls ist entsprechend aufgebaut. Zum Fixieren der Räder 17, 18 in der eingezogenen Position (Fig. 2) dient bei der Einheit 14 ein Sperrbolzen 22, der über einen Bowdenzug 25 betätigt werden kann. Bei der Einheit 15 ist ein Sperrbolzen 23 vorgesehen, der keinen derartigen Bowdenzug aufweist. Weiterhin weisen die Einheiten 14 bzw. 15 in Richtung der Achse 3 des Hohlraumes 2 gerichtete Zugstangen 27 auf, die an Kugelgelenken 28 miteinander koppelbar sind.

Zwischen zwei Einheiten 14, 15 befinden sich Strahler 6, 7, 7a die axial ausgerichtet sind, wobei bei den Modulen 8, 10 die Strahler 7 unten oder oben angeordnet sind, während die Strahler 6 bei den Modulen 9, 11 sich unten oder oben befinden, sodass dadurch eine gleichmäßige Bestrahlung des Eiprofils erfolgt.

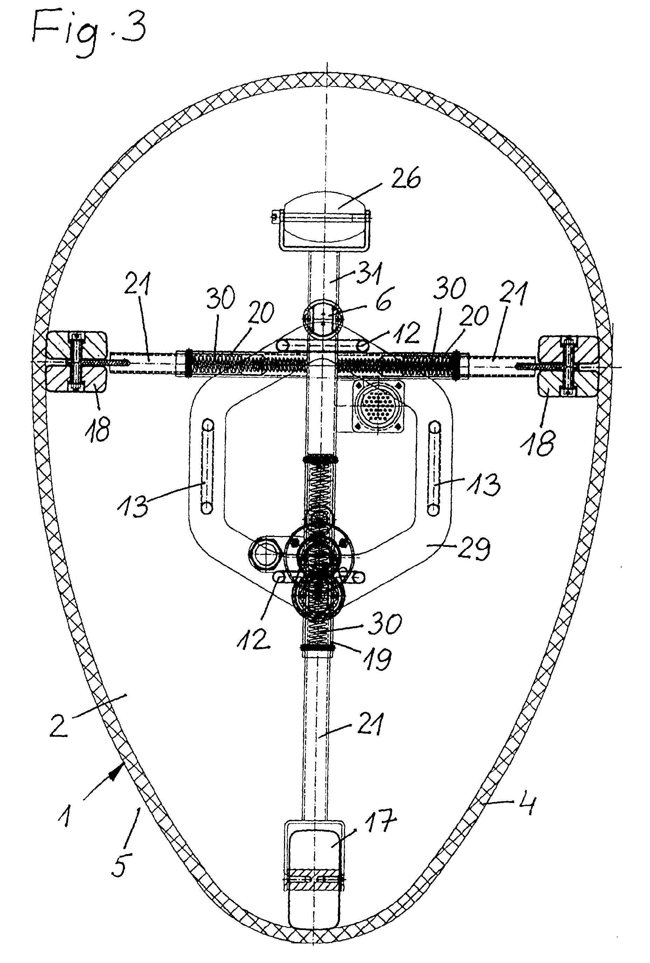

Das Entsperren der einzelnen Module 8, 9. 10, 11 erfolgt dadurch, dass zunächst der Sperrbolzen 22 über den Bowdenzug 25 und anschließend der Sperrbolzen 23 entriegelt werden, wodurch die Räder durch die Druckfedern 30 innen an dem Laminat 4 zur Anlage kommen (Fig. 3). Es besteht somit die Möglichkeit, jede Radebene pro Modul voneinander getrennt zu sperren, so dass die Strahlungsquelle in das zu kalibrierende Laminat eingebracht wird und erst nachdem das Modul im Laminat sitzt, werden die Räder entsperrt.

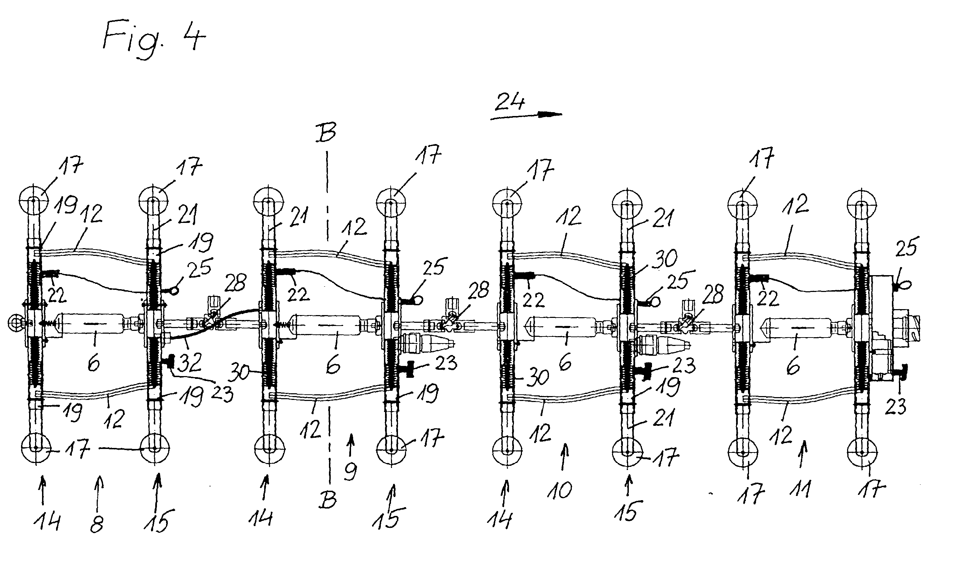

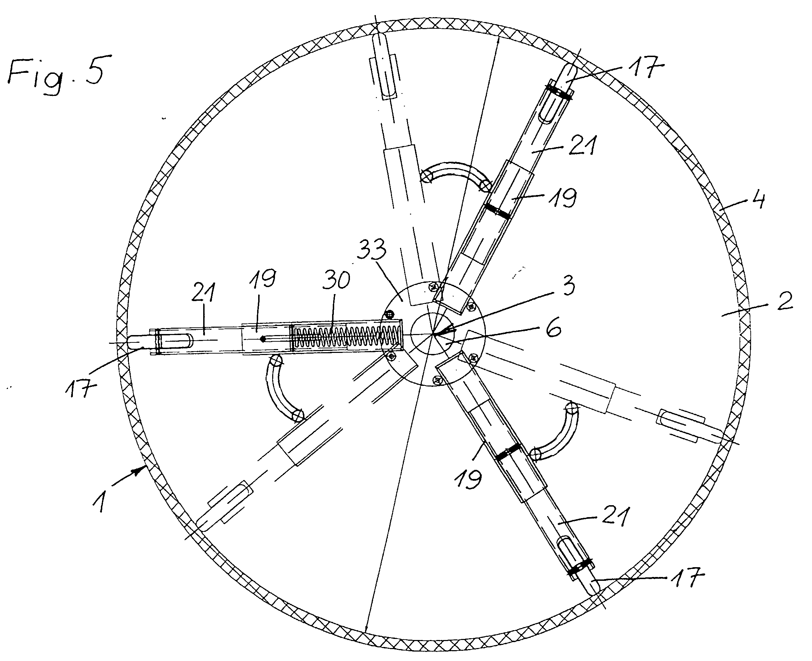

Bei der weiteren in den Figuren 4 und 5 gezeigten Ausführungsform für ein Kreisprofil, wobei diese Ausführungsform insbesondere für Profile ab einem Durchmessen von 600 mm bis etwa 1200 mm besonders geeignet ist, sind Stahler 6 axial zentrisch innerhalb des Hohlraumes 2 angeordnet. Die einzelnen Einheiten 14 bzw. 15 weisen sternförmig um eine mittlere Nabe 33 angeordnete Rohrrahmen 19 mit Radhalterungen 21 und Rädern 17 auf. Die Rohrrahmen 19 werden mit Hilfe von Druckfedern 30 nach außen gedrückt, so dass die Räder 17 an dem Laminat 4 anliegen.

Zwei Einheiten 14, 15 sind an den Verbindungsrohren starr zu den einzelnen Modulen 8, 9, 10, 11 verbunden. Zwischen den einzelnen Modulen 8 bis 11 ist neben der mechanischen Kopplung über die Kugelgelenke 28 eine elektrische Verbindung 32 vorgesehen.

## Patentansprüche

1. Strahlungsquelle für die Bestrahlung von Innenwänden (1) langgestreckter Hohlräume (2) mit kreisförmigem bis eiförmigem Querschnitt unter kontinuierlicher Bewegung der Strahlung längs der Achse (3) des Hohlraumes (2), insbesondere für die Aushärtung strahlungshärtbarer Kunstharz-Laminate (4) mittels UV-Strahlung, mit einem Fahrgestell, an dem Strahler (6, 7, 7a) angeordnet sind, **dadurch gekennzeichnet, dass** die Strahlungsquelle aus mehreren miteinander koppelbaren Modulen (8, 9, 10, 11) besteht, die jeweils zwei mittels Verbindungsrohren (12, 13) starr verbundene Einheiten (14, 15) aufweisen und zwischen zwei Einheiten (14, 15) in axialer Richtung und im Abstand zum Laminat (4) ein oder mehrere Strahler (6, 7, 7a) vorgesehen ist, wobei die Strahler (6, 7, 7a) an aufeinanderfolgenden Modulen (8, 10 bzw. 9, 11) wechselseitig im oberen oder unteren Bereich oder oben und unten mit verschiedener Leistung, bzw. axial zentrisch, des Hohlraumes (2) angeordnet sind und daß jede Einheit (14, 15) im unteren Sohlenbereich (16) bzw. im oberen Bereich des Hohlraumes (2) gefederte Räder (17, 18) aufweist.

2. Strahlungsquelle nach Anspruch 1, **dadurch gekennzeichnet, dass** jede Einheit (14, 15) zwei kreuzförmig angeordnete Rohrrahmen (19, 20) aufweist, an denen die Räder (17, 18) mittels Radhalterungen (21) geführt sind, die in einer eingezogenen Position mit Hilfe von Sperrbolzen (22, 23) feststellbar sind.

3. Strahlungsquelle nach Anspruch 1 und 2, **dadurch gekennzeichnet, dass** der an der in Zugrichtung (24) hinteren Einheit (14) angeordnete Sperrbolzen (22) mit einem Bowdenzug (25) versehen ist.

4. Strahlungsquelle nach Anspruch 1 bis 3, **dadurch gekennzeichnet, dass** gegenüber dem im unteren Sohlenbereich (16) angeordneten Rad (17) eine Schutzrolle (26) angeordnet ist.

5. Strahlungsquelle nach Anspruch 1 bis 4, **dadurch gekennzeichnet, dass** die Module (8, 9, 10, 11) einander zugewandt Zugstangen (27) aufweisen, die an Kugelgelenken (28) miteinander gekoppelt sind.

6. Strahlungsquelle nach Anspruch 1 bis 5, **dadurch gekennzeichnet, dass** an den einander zugewandten Seiten der Rohrrahmen (19, 20) der Einheiten (14, 15) eines Moduls (8, 9, 10, 11) Rahmenhalterungen (29) angebracht sind, an denen die Verbindungsrohe (12, 13) befestigt sind.
